# EUROPÄISCHE PATENTANMELDUNG

(11) **EP 1 033 508 A2**
(43) Veröffentlichungstag der Anmeldung: **06.09.2000**
(21) Anmeldenummer: 00101190.7
(22) Anmeldetag: 21.01.2000
(51) Int. Cl.: F16G 13/02

(54) **Treib- bzw. Förderkette**

(30) Priorität: 04.03.1999 DE 29903964 U
(71) Anmelder: JOH. WINKLHOFER & SÖHNE GmbH & Co KG, D-81369 München (DE)
(72) Erfinder: Dag, Heinrich, 82377 Penzberg (DE)
(74) Vertreter: Grünecker, Kinkeldey, Stockmair & Schwanhäusser Anwaltssozietät

(57) **Zusammenfassung**

Die Erfindung betrifft eine Treib- bzw. Förderkette mit jeweils durch ein Kettengelenk (11,12) miteinander verbundenen, sich in Laufrichtung (LF) erstreckenden Kettengliedern (1). Das Schwingungsverhalten einer solchen Kette soll verbessert werden. Hierzu sind zumindest einige der Kettenglieder entgegen der im Betrieb in Laufrichtung (L) wirkenden Zugkraft federelastisch gegeneinander vorgespannt.

## Beschreibung

Die vorliegende Erfindung betrifft eine Treib- bzw. Förderkette mit jeweils durch ein Kettengelenk miteinander verbundenen, sich in Laufrichtung erstreckenden Kettengliedern.

Derartige Ketten sind in vielfältiger Form im Stand der Technik als Antriebs- bzw. Treibketten oder als Förderketten im Einsatz. In den meisten Fällen handelt es sich um Laschenketten, bei denen jeweils ein Innenkettenglied aus zwei parallelen, mittels zwei Hülsen verbundenen Innenlaschen mit einem aus zwei mittels zwei Stiften miteinander verbundenen Außenlaschen bestehenden Außenkettenglied verbunden wird. Eine Hülse des Innenkettenglieds und ein Bolzen des Außenkettengliedes bilden dabei jeweils ein Kettengelenk. Während die Kettengelenke derartiger Laschenketten eine Schwenkbewegung der Kettenglieder nur in einer Ebene zulassen, sind auch Kettenglieder, insbesondere auf dem Gebiet der Förderketten, bekannt, die auch ein Verschwenken in mehreren Ebenen zulassen. So gibt es z.B. wendelförmig geführte Plattenbandketten, deren Kettengelenke jeweils abwechselnd um senkrecht zueinander verlaufende Ebenen schwenkbar sind. Die Kettenglieder sind bei einer solchen Kette alle gleich aufgebaut und weisen jeweils einen Gabelabschnitt und einen in den Gabelabschnitt des benachbarten Kettengelenks einsteckbaren Einsteckabschnitt auf. Sämtliche Gelenkbolzen einer derartigen Kette stehen über die Kettengelenke auf beiden Seiten über. Der senkrecht zum Blattenband angeordnete Gelenkbolzen ist mit Laufrollen versehen, während der parallel zum Plattenband verlaufende Gelenkbolzen mittels seiner seitlich überstehenden Endabschnitte als Eingriffsmittel für den Antrieb dient.

Zwar tritt das im folgenden beschriebene Problem bei im wesentlichen allen Treib- bzw. Förderketten auf. Jedoch soll es speziell anhand der oben näher beschriebenen Plattenbandkette erläutert werden. Eine derartige Plattenbandkette kann eine Gesamtlänge von über 100 m erreichen. Das von dieser Kette gebildete Plattenband dient zum Transport unterschiedlicher Gegenstände. Ein Anwendungszweck findet sich z.B. in der Zigaretten-Industrie. Die relativ leichten Zigarettenhülsen sind auf dem Plattenband gestapelt und werden mittels der Kette wendelförmig in z.B. einem Zigarettenspeicher geführt. Solche relativ leichten Gegenstände sind sehr anfällig gegenüber durch die Bewegung der Kette verursachten Vibrationen. Ein besonderes Problem besteht beim Anfahren der Kette. Da eine derartig lange Kette in aller Regel mittels mehrerer servogesteuerter Motoren gleichzeitig angetrieben wird, ist immer mit einem leichten zeitlichen Versatz zu rechnen. Darüber hinaus weisen sämtliche Kettengelenke ein gewisses Spiel auf, so daß es aufgrund der Art des Antriebs und des Regelverhaltens zu Schwingungen kommen kann, die zu Transportstörungen führen.

Es ist daher die Aufgabe der vorliegenden Erfindung, eine Gelenkkette derart zu verbessern, daß sie ein schwingungsärmeres Verhalten aufweist.

Diese Aufgabe wird erfindungsgemäß dadurch gelöst, daß zumindest einige der Kettenglieder entgegen der im Betrieb in Laufrichtung wirkenden Zugkraft federelastisch gegeneinander vorgespannt sind. Das bedeutet, daß durch geeignet ausgestaltete Einrichtungen das durch die Fertigungsgenauigkeit vorhandene Spiel der Kettengelenke durch eine Vorspannung der Kettenglieder gegeneinander im wesentlichen auf Null gesetzt wird. Das bedeutet, daß beim Anfahren der Kette erst einmal eine Kraft überwunden werden muß, damit überhaupt eine relative Verschiebung der Kettengelenke zueinander erfolgen kann. Die Vorspannung kann entweder so gewählt werden, daß auch im Betrieb diese immer größer ist, als die für die Förderung aufzubringende Längskraft. Jedoch wird es in aller Regel zweckmäßiger sein, die Kettengelenke nur mit einer solchen Kraft gegeneinander vorzuspannen, daß diese während des Anfahrvorgangs überwunden wird. Allerdings erfolgt die Überbrückung der Vorspannkraft bei weitem nicht so ruckartig, wie das Überbrücken des Spiels in einem Kettengelenk. Die Kettenglieder sind demnach im unbelasteten Zustand der Kette aufeinander zugezogen.

Darüber hinaus ergibt sich noch ein weiterer Vorteil, der sich insbesondere beim Zusammenspiel einer solchen Kette mit einem Kettenrad bemerkbar macht. Aufgrund der Vorspannung ist die Kette bestrebt, sich wegen der günstigeren Kraftverhältnisse möglichst gradlinig auszurichten. Beim Umlaufen eines Kettenrades kann im Auslaufbereich durch die Vorspannung ein eheres Auslaufen der Kettenglieder stattfinden, so dass zusätzlich die Kettenauslaufschwingungen an einem Kettenrad gedämpft werden.

Bevorzugt können zwischen vorbestimmten Kettengliedern federelastische Vorspannelemente zum Aufbringen der Vorspannung vorgesehen sein. Die Struktur bzw. der Aufbau der federelastischen Vorspannelemente sowie die Auswahl des Materials kann so bestimmt werden, daß das gewünschte Dämpfungsverhalten von einem solchen Vorspannelement aufgebracht wird. Dies ist insbesondere dann wichtig, wenn die Vorspannkraft überbrückt werden soll. Dann wird das Vorspannelement insbesondere dämpfend wirksam, wenn sich die Kette von der vorgespannten Stellung in die Stellung bewegt, in der das Spiel in den Kettengelenken überbrückt ist. Im Transport wird dann die gesamte Kraft wieder über die Kettengelenke und nicht ausschließlich über die Vorspannelemente übertragen. Das bedeutet, daß die Vorspannelemente genau in diesem Bereich wirken und Schwingungen aufgrund des Gelenkspiels reduziert werden. Durch die Vorspannelemente wird bevorzugt eine Zugkraft aufgebracht, so dass man auch von Zugelementen sprechen kann.

Ein relativ preiswerter und für den entsprechenden Einsatzzweck sehr gut verwendbarer Werkstoff für die Vorspannelemente ist Gummi. Darüber hinaus kann auch jeder andere gummiartige Werkstoff, der ein gleiches bzw. ähnliches Verhalten aufweist, eingesetzt werden.

Gemäß einer Ausführungsform können die Kettenglieder mindestens einen seitlich überstehenden Bolzen umfassen, an dem jeweils mindestens ein Vorspannelement angebracht ist. In den meisten Fällen können derartige Bolzen durch die Kettengelenkbolzen gebildet werden, die u.U. etwas seitlich verlängert überstehen müssen. Jedoch sind auch Varianten denkbar, wo diese Befestigungsmöglichkeiten separat zu den Kettengelenken an den Kettengliedern angebracht sind. Es handelt sich hierbei um eine sehr einfache und kostengünstige Lösung, da derartige Bolzen vielfache Möglichkeiten zur Befestigung der Vorspannelemente eröffnen.

Es kann z.B. vorgesehen sein, daß das Verbindungselement zwei Ösenabschnitte und einen diese verbindenden Steg umfaßt, wobei die Ösenabschnitte jeweils auf einen Bolzen aufgesteckt sind. Derartige Verbindungselemente können z.B. brillenförmig aussehen, wobei die Mittelpunkte der Ösenabschnitte im ungespannten Zustand einen Abstand voneinander aufweisen, der kleiner ist als der Mittenabstand der Bolzen.

Eine weitere Möglichkeit besteht darin, daß das Vorspannelement aus einem elastischen Strang gebildet ist, der an vorbestimmten Befestigungsstellen an den Kettengliedern festgeklemmt ist. Zum Beispiel wäre eine durchgehende Gummischnur denkbar, die in vorgespanntem Zustand an bestimmten Stellen an den Kettengliedern festgeklemmt wird.

Um eine ausreichende Symmetrie sicherzustellen, ist es gemäß einer weiteren Ausführungsform sinnvoll, daß auf zwei gegenüberliegenden Seiten der Kettenglieder Vorspannelemente angeordnet sind. Insbesondere eignet sich hier eine exakt symmetrische Anordnung, bei der auch die Befestigungsstellen bzw. Bolzen, an denen die Vorspannelemente befestigt sind, an genau gegenüberliegenden Stellen an den Kettengliedern positioniert sind.

Um einen möglichst vibrationsarmen Lauf und entsprechend gedämpftes Anfahrverhalten zu erreichen, kann zwischen zwei Befestigungsstellen eines Vorspannelementes jeweils ein Kettengelenk angeordnet sein. Hierdurch wird sichergestellt, daß im wesentlichen sämtliche Kettengelenke vorgespannt sind, so daß entsprechendes Spiel für den Anfahrvorgang ausgeglichen ist. In diesem Zusammenhang eignet sich auch das Anbringen des jeweils nächsten Verbindungselementes an derselben Befestigungsstelle, wo das benachbarte Vorspannelement endet. Eine lückenlose vorgespannte Kette wird hierdurch erhalten. Unter Befestigungsstellen gelten in diesem Zusammenhang auch die Bolzen.

Im folgenden werden Ausführungsbeispiele der Erfindung anhand einer Zeichnung näher erläutert. Es zeigen:
- Fig. 1: eine Seitenansicht einer Plattenbandkette mit einer ersten Ausführungsform von Vorspannelementen und
- Fig. 2: eine Seitenansicht auf eine Plattenbandkette mit Vorspannelementen gemäß einer zweiten Ausführungsform.

Die im folgenden beschriebene Plattenbandkette stellt im Rahmen der Erfindung ein Beispiel zur Ausgestaltung einer Förderkette dar. Die Erfindung läßt sich jedoch bei jeglicher anderer Art von Ketten ebenfalls anwenden, wobei sich die Wirkung insbesondere bei sehr langen Ketten, insbesondere Förderketten, besonders bemerkbar macht.

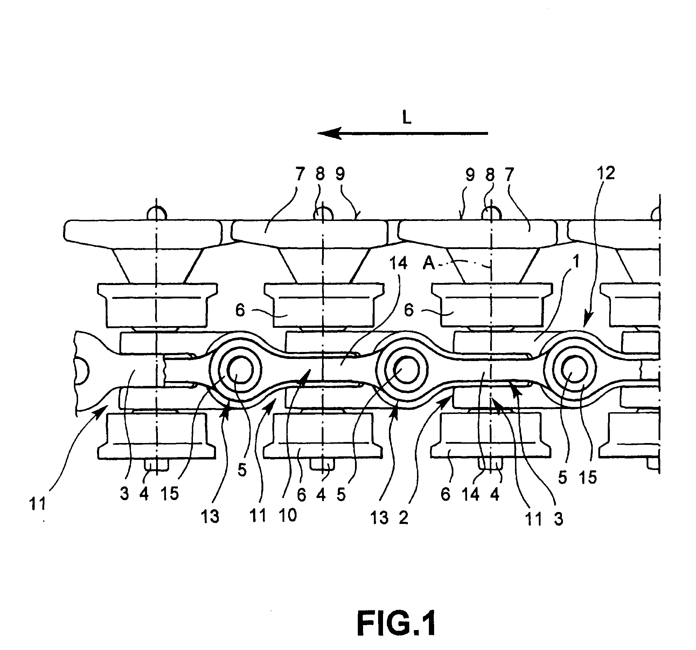

Bei der in Fig. 1 dargestellten Plattenbandkette handelt es sich um ein Förderelement, das insbesondere zum Transport leichter Gegenstände, wie Zigaretten oder ähnliches, verwendet wird. Die Kette besteht im wesentlichen aus aneinandergereihten Kettengliedern 1, die einen gabelförmigen Aufnahmebereich 2 und einen in den Aufnahmebereich 2 eines benachbarten Kettengliedes einfügbaren Einsteckbereich 3 aufweisen. Die beiden Gabelschenkel des Aufnahmebereichs 2 sind mit zueinander fluchtenden Bohrungen versehen. Der Einsteckbereich 3 weist ebenfalls eine Bohrung auf, deren Achse senkrecht zu der Achse der Bohrungen im Aufnahmebereich 2 desselben Kettengliedes 1 ausgerichtet ist. Die einzelnen Kettenglieder 1 sind somit jeweils abwechselnd um 90° zueinander gedreht angeordnet, so daß jeweils der Einsteckbereich 3 des einen Kettengliedes 1 mit dem Aufnahmebereich 2 des benachbarten Kettengliedes 1 gesteckt werden kann. Ein durch die entsprechenden Bohrungen gesteckter Gelenkbolzen 4 bzw. 5 sorgt dann für die Verbindung der Kettenglieder Der Gelenkbolzen 4 ist in der Fig. 1 vertikal angeordnet und steht seitlich über die Kettenglieder 1 über, so daß auf diesem ober- und unterhalb der Kettenglieder 1 Laufrollen 6 angeordnet sind. Diese Laufrollen 6 dienen zur exakten Führung der Kette in einem Schienensystem. Die Kette wird in Laufrichtung L bewegt, d.h. in Richtung der Längserstreckung der Kette.

Die Befestigung der vertikalen Gelenkbolzen 4 erfolgt mittels nicht näher dargestellter aufgepreßter Scheiben an dessen Endbereich. Am in der Fig. 1 oberen Ende erstreckt sich der vertikale Gelenkbolzen 4 in ein aus Kunststoff bestehendes Plattenbandglied 7. Das Plattenbandglied 7 ist mit einem in die Ebene der Zeichnung verlaufenen Profilsteg 8 versehen. Das Ende des vertikalen Gelenkbolzens 4 steht nicht über die Plattenbandoberfläche 9 über. Mehrere nebeneinander angeordnete Plattenbandglieder 7 ergeben dann das Plattenband zum Transportieren der Gegenstände. Die einander zugewandten Seitenkanten der Plattenbandglieder 7 sind mit Profilierungen versehen, so daß sie ineinandergreifen. Auf den in der Zeichnung horizontal angeordneten und sich senkrecht zur Zeichnungsebene erstreckenden Gelenkbolzen 5 sind Vorspannelemente 10, bevorzugt aus einem geeigneten, federelastischem Kunststoff, aufgesetzt. Die Gelenkbolzen 5 stehen seitlich über die Kettenglieder 1 über, da diese Endabschnitte der Gelenkbolzen 5 zu Antriebszwekken, insbesondere zum Eingriff eines Antriebselementes (z.B. ein Kettenrad) ausgestaltet sind.

Die Vorspannelemente 10 erstrecken sich bei diesem Ausführungsbeispiel von einem Gelenkbolzen 5 zum benachbarten Gelenkbolzen 5, so daß jeweils ein Kettengelenk 11 mit vertikaler Schwenkachse dazwischen angeordnet ist. Die Kettengelenke 12 weisen demnach eine horizontale Schwenkachse auf. Das Vorspannelement 10 besteht aus zwei Ösenbereichen 13, von denen jeder jeweils an einem Ende des Vorspannelements 10 angeordnet ist. Die Ösenbereiche 13 sind so ausgestaltet, daß sie auf die Enden der Gelenkbolzen 5 aufschiebbar sind. Das Aufschieben kann durch Aufpressen oder lose erfolgen. Die beiden Ösenbereiche 13 werden mittels eines Verbindungssteges 14 miteinander verbunden. Der Verbindungssteg 14 ist im ungespannten Zustand von einer geringeren Länge, als die mittlere Länge des Mittenabstands der benachbarten Gelenkbolzen 5. Bei Verwendung eines z.B. gummiartigen Materials kann dann durch die Vorspannelemente 10 eine das Spiel in den Kettengelenken 11 und 12 ausschaltende Vorspannung erzielt werden.

An ein und demselben Gelenkbolzen 5 sind auf einer Seite des Kettengliedes 1 jeweils zwei Ösenbereiche 13 aufgeschoben, so daß eine lückenlose Kette an Vorspannelementen 10 entsteht. Die Vorspannelemente 10 können so wie in Fig. 1 dargestellt mit ihren Ösenbereichen 13 jeweils abwechselnd an erster oder zweiter Stelle an dem zugeordneten Ende des Gelenkbolzens 5 angeordnet sein. Die Vorspannelemente 10 können aber auch vollständig abwechselnd, in der Draufsicht gesehen, an der Kette angeordnet werden. Die Befestigung des Gelenkbolzens 5 einschließlich der Vorspannelemente 10 erfolgt mittels aufgepreßter Ringscheiben 15.

Aus symmetrischen Gründen ist auf der gegenüberliegenden Seite der Kette ein gleichartiges Vorspannband aus einzelnen Vorspannelementen 10 gebildet, die entsprechend auf den gegenüberliegenden Enden der Gelenkbolzen 5 aufgesteckt und mittels einer weiteren Ringscheibe 15 fixiert sind. Somit erstrecken sich auf beiden Seiten der Kette entsprechende Vorspannelemente 10.

Derartige Plattenbandketten werden u.a. in Speichervorrichtungen eingesetzt und weisen sehr leicht eine Länge von 100 m auf. Durch die wechselnde Anordnung von vertikalen und horizontalen Kettengelenken 11 und 12 läßt sich die Kette wendelförmig führen, was aus Platzgründen von Vorteil ist. Aufgrund der Länge der Ketten erfolgt der Antrieb über mehrere Elektromotoren, die mit geeigneten Kettenrädern in die überstehenden Enden der Gelenkbolzen 5 eingreifen. Die Kette ist dabei in einem Schienensystem mittels der Laufrollen 6 geführt. Aufgrund des Regelverhaltens der Motoren, kommt es insbesondere beim Anfahren und Abbremsen der Plattenförderkette zu Transportstörungen. Dies macht sich insbesondere bei sehr leichten zu fördernden Gegenständen bemerkbar, wie z.B. Zigaretten. Auch Schwingungen, die sich aufgrund des generellen Aufbaus einer solchen Kette ergeben könnten, müssen abgefangen werden. Die hierzu verwendeten Vorspannelemente 10 spannen die Kettengelenke 11, 12 gegeneinander vor, so daß sie immer in einer definierten Stellung an einander gehalten sind, jedoch ihre Beweglichkeit nicht eingeschränkt ist. Die Vorspannelemente 10 haben sehr großen Einfluß auf das Eigenschwingverhalten der Plattenbandkette. Diese Verschiebung der Eigenschwingung reagiert anders auf Anregungsquellen, die sich aufgrund des Aufbaus der Kette oder aufgrund der Antriebsregelung ergeben. Da die Vorspannung der Vorspannelemente 10 erst durch Krafteinwirkung aus ihrer fixierten Lage gebracht werden können, kommt es nicht zu ruckartigen Längsschwingungen der Kette, was nachhaltig Einflüsse auf die Transportwirkung haben kann. Insbesondere ist in diesem Zusammenhang der Kettenschub nicht zu vernachlässigen, der aufgrund des Spiels in den Kettengelenken 11, 12, insbesondere beim Abbremsen der Kette (Kettenzugkraft wird Null) zu ruckartigen Längsschwingungen führt.

Die Vorspannelemente 10 können durch Aufbringen der für den entsprechenden Anwendungsfall ausgewählten Vorspannkraft das Eigenschwingverhalten der Kette gezielt beeinflussen und solche Störeinflüsse ausschalten bzw. minimieren.

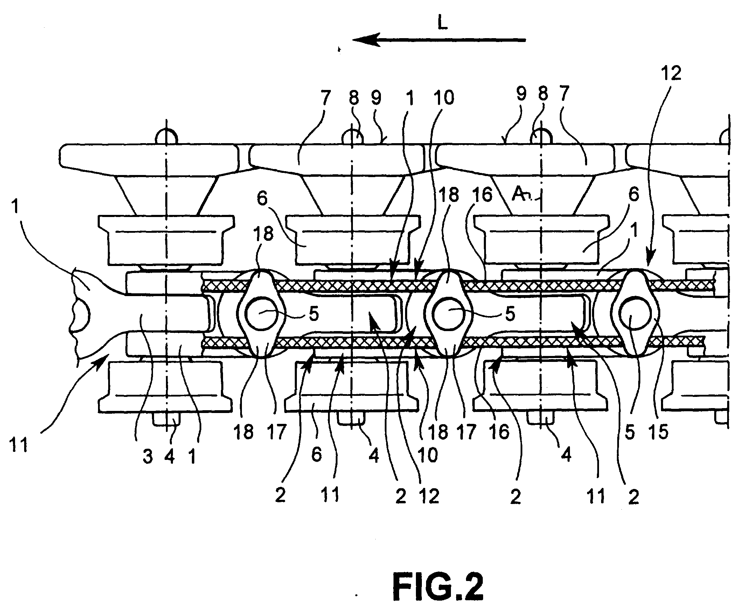

Im folgenden wird anhand der Fig. 2 ein zweites Ausführungsbeispiel einer Plattenbandkette näher erläutert. Soweit auf ähnliche bzw. gleiche Bauelemente im Vergleich zum vorangegangenen Ausführungsbeispiel eingegangen wird, wird auf diese mit den gleichen Bezugsziffern und mit Hinweis auf die obige Beschreibung Bezug genommen. Im folgenden werden daher lediglich die wesentlichen Unterschiede erläutert.

Der Hauptunterschied besteht darin, daß das Vorspannelement 10 jeweils aus zwei durchgehenden Gummischnüren 16, die unter vorgewählter Vorspannung durch eine speziell ausgestaltete Befestigungsscheibe 17 an den Kettengliedern 1 festgeklemmt sind. Auf jeder Seite der Kettenglieder 1 befinden sich zwei solcher Gummischnüre 16, die im Abstand zueinander und ober- und unterhalb des Gelenkbolzens 5 angeordnet sind. Die Befestigungsscheibe 17 weist oben und unten jeweils eine Klemmnase 18 auf, mit der die Gummischnüre 16 an entsprechender Stelle festgeklemmt werden. Die Klemmung wird dadurch erzeugt, daß die Klemmnase 18 der Befestigungsscheibe 17 die Gummischnur 16 fest auf die Außenseite des Aufnahmebereichs 2 drückt. Auch hier kann das Material bzw. die Vorspannung des Vorspannelements 10 entsprechend den Gegebenheiten gewählt werden. Wichtig ist, daß das Vorspannelement 10 eine entsprechend federelastische Wirkung besitzt.

Die zweite Ausührungsform ist insbesondere aus fertigungstechnischen Gründen eine sehr einfach herzustellende Alternative. Die Wirkung dieser Anordnung entspricht im wesentlichen der oben bezüglich des ersten Ausführungsbeispiels beschriebenen.

## Patentansprüche

1. Treib- bzw. Förderkette mit jeweils durch ein Kettengelenk (11, 12) miteinander verbundenen, sich in Laufrichtung (L) erstreckenden Kettengliedern (1), **dadurch gekennzeichnet**, daß zumindest einige der Kettenglieder (1) entgegen der im Betrieb in Laufrichtung (L) wirkenden Zugkraft federleastisch gegeneinander vorgespannt sind.

2. Treib- bzw. Förderkette nach Anspruch 1, **dadurch gekennzeichnet,** daß zwischen vorbestimmten Kettengliedern (1) federelastische Vorspannelemente (10) zum Aufbringen der Vorspannung vorgesehen sind.

3. Treib- bzw. Förderkette nach Anspruch 2, **dadurch gekennzeichnet,** daß das Vorspannelement (10) aus einem gummiartigen Werkstoff besteht.

4. Treib- bzw. Förderkette nach Anspruch 2 oder 3, **dadurch gekennzeichnet,** daß die Kettenglieder (1) mindestens einen seitlich überstehenden Bolzen (5) umfassen, in dem jeweils mindestens ein Vorspannelement (10) angebracht ist.

5. Treib- bzw. Förderkette nach Anspruch 4, **dadurch gekennzeichnet,** daß die Kettengelenke (11, 12) jeweils einen Kettengelenkbolzen (5) umfassen, der den seitlich überstehenden Bolzen bildet.

6. Treib- bzw. Förderkette nach einem der Ansprüche 2 bis 5, **dadurch gekennzeichnet,** daß das Verbindungselement (10) zwei Ösenabschnitte (13) und einen diesen verbindenden Steg (14) umfaßt, wobei die Ösenabschnitte (13) jeweils auf einen Bolzen (5) aufgesteckt sind.

7. Treib- bzw. Förderkette nach einem der Ansprüche 2 bis 5, **dadurch gekennzeichnet,** daß das Vorspannelement (10) aus einem elastischen Strang (16) gebildet ist, der an vorbestimmten Befestigungsstellen an den Kettengliedern (1) festgeklemmt ist.

8. Treib- bzw. Förderkette nach einem der Ansprüche 2 bis 7, **dadurch gekennzeichnet,** daß auf zwei gegenüberliegenden Seiten der Kettenglieder (1) Vorspannelemente (10) angeordnet sind.

9. Treib- bzw. Förderkette nach einem der Ansprüche 4 bis 7, **dadurch gekennzeichnet,** daß zwischen zwei Befestigungsstellen eines Vorspannelementes (10) jeweils ein Kettengelenk (1) angeordnet ist.
